# EUROPÄISCHE PATENTSCHRIFT

(11) **EP 2 900 071 B1**
(45) Veröffentlichungstag und Bekanntmachung des Hinweises auf die Patenterteilung: **28.03.2018**
(21) Anmeldenummer: 13782959.4
(22) Anmeldetag: 26.09.2013
(51) Int. Cl.: A21C 15/00

(54) **FÜLLVORRICHTUNG ZUM EINSPRITZEN EINES FÜLLGUTS IN BACKWAREN**
FILLING DEVICE FOR INJECTING CONTENTS INTO BAKED ARTICLES
DISPOSITIF DE FOURRAGE SERVANT À INJECTER UN FOURRAGE DANS DES PÂTISSERIES

(30) Priorität: 26.09.2012 DE 102012018904
(43) Veröffentlichungstag der Anmeldung: 05.08.2015
(73) Patentinhaber: Lösch, Rolf, 69254 Malsch (DE)
(72) Erfinder: Lösch, Rolf, 69254 Malsch (DE)
(74) Vertreter: Lichti - Patentanwälte Partnerschaft mbB
(86) Internationale Anmeldenummer: PCT/EP2013/002882
(87) Internationale Veröffentlichungsnummer: WO 2014/048566

(56) Entgegenhaltungen:
- DE-C- 903 323
- GB-A- 206 312
- GB-A- 340 070
- GB-A- 2 475 955
- US-A1- 2007 023 456

## Beschreibung

Die Erfindung betrifft eine Füllvorrichtung zum Einspritzen eines Füllguts in Backwaren gemäß dem Oberbegriff des Anspruchs 1.
Eine entsprechende Füllvorrichtung dient beispielsweise dazu, eine Backware, beispielsweise ein Donut, einen Berliner oder eine Teigtasche nachträglich mit einem von einem pastösen Lebensmittel gebildeten Füllgut, insbesondere einer Marmelade oder einer Creme zu füllen.
Im Stand der Technik sind verschiedene Füllvorrichtungen zum Befüllen von Backwaren bekannt. Beispielsweise zeigt die DE 20 2005 020 154 U1 eine Füllvorrichtung, bei der das Füllgut in einem Standgefäß angeordnet ist. Aus diesem Standgefäß wird das Füllgut mittels einer Schlauchpumpe in ein Schlauchsystem gefördert und mittels einer oder mehrerer Einspritzvorrichtungen in die Backware eingespritzt. Derartige Füllvorrichtungen sind insbesondere für den Einsatz in großen Bäckereifabriken geeignet, da mit ihnen relativ große Mengen an Füllgut schnell verarbeitet werden können.

In kleineren Bäckereien oder in Verkaufsständen wird eine nur geringe Menge an Füllgut verarbeitet, da verschiedene Backwaren mit jeweils unterschiedlichen Füllungen hergestellt und zum Verkauf bereitgehalten werden sollen. Für derartige Betriebe sind große Standgefäße, wie sie bei der Füllvorrichtung gemäß der DE 20 2005 020 154 U1 vorgesehen sind, nicht sinnvoll, da derartig große Füllgutmengen nicht schnell genug verarbeitet werden können. Es besteht somit die Gefahr, dass das Füllgut verdirbt und unbrauchbar wird. Darüber hinaus ist bei kleineren Betrieben ein häufiger Wechsel des Füllguts erwünscht, was jeweils zu einer Reinigung der Füllvorrichtung führt, was zeitaufwändig und unwirtschaftlich ist.

Im Oberbegriff des Anspruchs 1 wird von einer Füllvorrichtung ausgegangen, wie sie in der DE 903 323 gezeigt ist. Eine entsprechende Füllvorrichtung besitzt einen Füllkopf, der zwei Füllrohre trägt. In dem Füllkopf ist eine großvolumige Füllkopfkammer ausgebildet, in der ein Rückschlagventil angeordnet ist. Durch Verschieben eines Kolbens kann ein Füllgut aus einem Füllgutbehälter unter Öffnung des Rückschlagventils in die Füllkopfkammer des Füllkopfs eingebracht werden. Die Füllrohre münden direkt in die Füllkopfkammer. Dies hat zur Folge, dass bei einem Produktwechsel erst das gesamte Füllgut, dass sich in der Füllkopfkammer des Füllkopfes befindet, herausgedrückt werden muss, bevor ein neues Material in die Backwaren eingefüllt werden kann. Auf diese Weise ist ein Produkt- oder Füllgutwechsel relativ aufwändig und es geht relativ viel Füllgut verloren.

Der Erfindung liegt die Aufgabe zugrunde, eine Füllvorrichtung zum Einspritzen eines Füllguts in Backwaren zu schaffen, mit der auch kleinere Mengen an Füllgut in wirtschaftlicher Weise verarbeitet werden können und die einen raschen Wechsel des Füllguts ermöglicht.

Diese Aufgabe wird erfindungsgemäß durch eine Füllvorrichtung der genannten Art gelöst, die die Merkmale des Anspruchs 1 aufweist.

Um eine möglichst wirtschaftliche Befüllung von Donuts oder anderen balligen oder ringförmigen Backwaren zu erzielen, weist der Einspritzkopf gemäß der Erfindung mehrere Einspritzdüsen auf, die an einem Verteilerblock angeordnet sind. Die Einspritzdüsen können auf Abstand parallel nebeneinander angeordnet und insbesondere in einer Ringkonfiguration angeordnet sein, so dass eine gleichmäßige Verteilung des Füllguts innerhalb der Backwaren erreicht werden kann.

Dabei ist in dem Verteilerblock für jede Einspritzdüse ein separater Befüllkanal ausgebildet. Die Dimensionen der Befüllkanäle können relativ gering sein, so dass bei einem Füllgutwechsel nur relativ geringe Mengen des vorherigen Füllguts noch in dem Einspritzkopf vorhanden sind. Auf diese Weise ist der Füllgutverlust bei einem Füllgutwechsel relativ gering, so dass auch ein häufiger Füllgutwechsel wirtschaftlich realisiert werden kann.

Erfindungsgemäß wird das Füllgut durch die Bewegung des Kolbens aus dem Zylinder herausgedrückt und tritt an einem Zuführkanal in den Einspritzkopf ein. Dabei stehen alle Befüllkanäle an ihrem stromauf liegenden Ende mit dem gemeinsamen Zuführkanal in Verbindung und werden aus diesem gespeist.

Die separaten Befüllkanäle können gemäß einer möglichen Ausführungsform der Erfindung direkt in dem Verteilerblock ausgebildet und insbesondere in diesen eingefräst sein. Um auch eine Nachrüstung von bereits vorhandenen Einspritzköpfen zu ermöglichen, kann aber auch ein entsprechendes Nachrüstteil vorgesehen sein.

Es ist vorgesehen, dass die vorbestimmte Strecke, um die der Kolben bei Betätigung der Betätigungsvorrichtung verschiebbar ist, vom Benutzer eingestellt und verändert werden kann. Desweiteren ist vorgesehen, dass der Zylinder mit der Betätigungsvorrichtung und/oder den Einspritzkopf lösbar verbunden ist.

Die Füllvorrichtung zum Einspritzen eines Füllguts in Backwaren besitzt einen Zylinder, in den das Füllgut eingefüllt werden kann. Am vorderen, stromab liegenden Ende des Zylinders ist ein Einspritzkopf lösbar befestigt und insbesondere mit dem Zylinder verschraubt oder verrastet. Das entgegengesetzte hintere Ende des Zylinders ist lösbar an der Betätigungsvorrichtung angebracht und insbesondere mit dieser verschraubt oder verrastet. In dem Zylinder ist der Kolben längs verschieblich gelagert, wobei die Verstellung des Kolbens mittels der Betätigungsvorrichtung erfolgt. Erfindungsgemäß ist dabei vorgesehen, dass der Kolben bei Betätigung der Betätigungsvorrichtung um eine vom Benutzer vorher eingestellte und veränderbare Strecke verschoben wird.

Durch die Wahl eines in der Größe geeigneten Zylinders können somit auch kleine Mengen an Füllgut wirtschaftlich verarbeitet werden. So kann beispielsweise für die Füllung von 12 Donuts, die üblicherweise auf einem Backblech Platz finden, ein Zylinder mit einem Fassungsvermögen von 200ml verwendet werden. Nach dem Befüllen der ersten 12 Donuts kann der Zylinder von der Betätigungsvorrichtung gelöst und ein neuer Zylinder an dieser angebracht werden, um weitere Donuts mit einem anderen Füllgut zu füllen. Wenn mehrere Zylinder vorhanden sind, kann der Befüllvorgang mit nur geringer zeitlicher Verzögerung fortgesetzt werden. Anschließend kann die Reinigung der Zylinder gegebenenfalls auch in einer Spülmaschine erfolgen. Wenn eine größere Anzahl von Donuts mit dem gleichen Füllgut gefüllt werden soll, kann entweder ein größerer Zylinder mit einem größeren Fassungsvermögen verwendet werden oder es kann nach einer gewissen Zeit weiteres Füllgut in den Zylinder nachgefüllt werden.

Die Einstellbarkeit der Strecke, um die der Kolben in den Zylinder bei Betätigung der Betätigungsvorrichtung verschoben wird, ermöglicht eine genaue Kontrolle der bei jeder Betätigung der Betätigungsvorrichtung eingefüllten Menge an Füllgut, so dass eine gute Reproduzierbarkeit erreicht ist. Dabei kann der Kolben infolge einer einzigen Betätigung der Betätigungsvorrichtung vom hinteren Ende des Zylinders direkt zum vorderen Ende des Zylinders verschoben werden, wenn die in dem Zylinder vorhandene Füllmenge genau einer gewünschten Füllgutportion entspricht. Sollen hingegen mehrere Füllgutportionen aus dem Zylinder nacheinander entnommen werden, kann der Kolben in mehreren kleineren Schritten verschoben werden. Dabei kann vorgesehen sein, zwischen zwei Bewegungsschritten die Größe der Füllgutportion neu zu wählen, indem die Strecke, die der Kolben bei Betätigung der Betätigungsvorrichtung verschoben wird, verändert wird.

Das Füllgut kann direkt in den Zyliner eingefüllt werden. In bevorzugter Ausgestaltung der Erfindung ist jedoch vorgesehen, dass das Füllgut in einem flexiblen Füllgutbehälter beispielsweise in Form eines Schlauchbeutels aus Kunststoff angeordnet und zusammen mit diesen in den Zylinder einsetzbar ist. Der Schlauchbeutel wird an seinem dem Einspritzkopf zugewandten Ende geöffnet und der Einspritzkopf wird auf dem Zylinder befestigt. Wenn der Kolben bei Betätigung der Betätigungsvorrichtung innerhalb des Zylinders verschoben wird, schiebt er den Schlauchbeutel vor sich her und drückt diesen zusammen, wobei das Füllgut aus dem Schlauchbeutel herausgedrückt und durch den Einspritzkopf in die Backwaren eingebracht wird. Besonders vorteilhaft ist dabei, dass sich der Schlauchbeutel weitestgehend komprimieren lässt, so dass einerseits das im Schlauchbeutel befindliche Füllgut annähernd vollständig aus dem Schlauchbeutel herausgedrückt werden kann. Einerseits kommt es während des Befüllvorgangs zu keiner oder nur einer geringfügigen Berührung der Wandung des Zylinders mit dem Füllgut, so dass der nachfolgende Reinigungsaufwand bei einem Füllgutwechsel minimiert ist.

Sollte das in dem Zylinder befindliche Füllgut nicht vollständig verbraucht sein, kann der Zylinder von der Betätigungsvorrichtung gelöst und an seinen hinteren Ende mit einem geeigneten Verschlusselement verschlossen werden. An dem entgegengesetzten vorderen Ende des Zylinders kann der Einspritzkopf verbleiben. Alternativ ist es jedoch auch möglich, den Einspritzkopf ebenfalls zu entfernen und den Zylinder auch an seinem vorderen Ende mit einem Verschlusselement zu verschließen. Der so verschlossene Zylinder kann dann beispielsweise gekühlt gelagert werden, bis das entsprechende Füllgut wieder verarbeitet werden soll. Eine solche Lagerung des befüllten Zylinders ist auch dann möglich, wenn das Füllgut direkt in den Zylinder eingefüllt und nicht in einem zwischengeschalteten Schlauchbeutel aufgenommen ist.

In bevorzugter Ausgestaltung ist vorgesehen, dass die Betätigungsvorrichtung zumindest einen schwenkbaren Hebel aufweist, dessen Schwenkbewegung in eine lineare Verstellbewegung des Kolbens in dem Zylinder umsetzbar ist. Dies kann beispielsweise über ein an sich bekanntes Schrittschaltwerk erfolgen. Ein entsprechender Hebel lässt sich in einfacher Weise manuell betätigen, so dass eine einfache Bedienung der Füllvorrichtung gegeben ist. Neben einer manuellen Betätigung der Betätigungsvorrichtung kann für den Kolben auch ein elektrischer, ein pneumatischer oder ein hydraulischer Antrieb vorgesehen sein.

In Weiterbildung der Erfindung kann vorgesehen sein, dass der Anschlag, der die maximale Schwenkbewegung des Hebels begrenzt, ein auswechselbares Distanzstück aufweist. Durch entsprechende Wahl eines geeigneten Distanzstückes kann der Benutzer die maximale Schwenkbewegung bzw. den Hub des Hebels bestimmen. Wenn ein anderer Hub des Hebels und somit eine andere Verstellstrecke des Kolbens gewünscht ist, braucht der Benutzer lediglich das Distanzstück gegen ein anderes Distanzstück auszutauschen.

Die Füllvorrichtung kann eine Befestigungsvorrichtung aufweisen, mit der sie beispielsweise an einer Tischplatte angebracht werden kann. Die Füllvorrichtung wird dabei vorzugsweise vertikal ausgerichtet, wobei das vordere Ende des Zylinders mit dem Einspritzkopf nach oben zeigt. Die zu befüllende Backwaren kann von dem Benutzer manuell auf dem Einspritzkopf mit einer Hand positioniert werden, wobei der Benutzer mit der anderen Hand die Betätigungsvorrichtung bzw. den Hebel betätigen kann. Die Füllvorrichtung muss dabei während einer Unterbrechung des Befüllvorgangs nicht abgelegt werden, so dass eine Verunreinigung einer Arbeitsfläche vermieden ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: einen Schnitt durch eine erfindungsgemäße Füllvorrichtung zum Einspritzen eines Füllguts in Backwaren,
- Fig. 2: eine schematische Seitenansicht eines Einspritzkopfes,
- Fig. 3: den Querschnitt III-III in Figur 2,
- Fig. 4: eine Ansicht eines flexiblen Füllgutbehälters,
- Fig. 5: den Füllgutbehälter gemäß Figur 4 mit geöffnetem oberen Ende,
- Fig. 6: eine Füllvorrichtung mit eingesetztem Füllgutbehälter,
- Fig. 7: die Füllvorrichtung mit geleertem Füllgutbehälter und
- Fig. 8: den komprimierten Füllgutbehälter nach Entnahme des Füllguts.

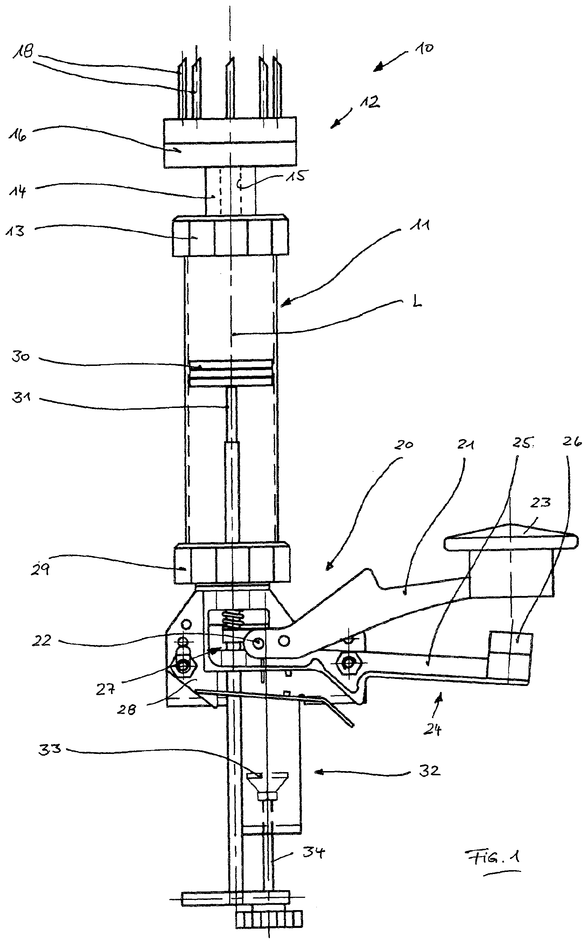

Figur 1 zeigt eine erfindungsgemäße Füllvorrichtung 10 zum Einspritzen eines Füllguts in Backwaren. Die Füllvorrichtung 10 besitzt einen Zylinder 11, der vorzugsweise einen Kreisquerschnitt besitzt und in den das Füllgut eingefüllt werden kann. Der Zylinder 11 weist an seinem vorderen, gemäß Figur 1 oberen Ende ein nicht dargestelltes Außengewinde auf, auf das ein Einspritzkopf 12 mit einer Überwurfmutter 13 aufgeschraubt werden kann. An seinem hinteren, gemäß Figur 1 unteren Ende besitzt der Zylinder 11 ein gleichartiges Außengewinde, mit dem er mit Hilfe einer Überwurfmutter 29 auf eine Betätigungsvorrichtung 20 aufgeschraubt werden kann. Die beiden Außengewinde des Zylinders 11 sind vorzugsweise identisch ausgebildet, so dass keine spezielle Ausrichtung des Zylinders 11 erforderlich ist.

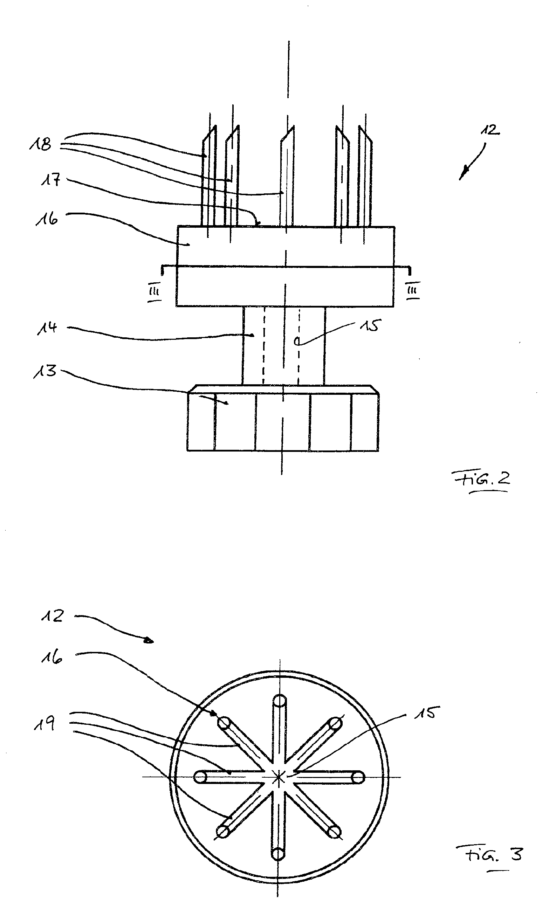

Der Einspritzkopf 12, der auch in den Figuren 2 und 3 dargestellt ist, sitzt an seinem unteren Ende ein rohrförmiges Verbindungsstück 14, in dem ein axialer Zuführkanal 15 ausgebildet ist. Auf der der Überwurfmutter 3 abgewandten Seite des Verbindungsstücks 15 ist ein Verteilerblock 16 angeordnet. In dem Verteilerblock 16 sind mehrere radial über den Umfang verteilt angeordnete Befüllkanäle 17 ausgebildet, die an ihrem radial inneren Ende mit dem Zuführkanal 15 in Verbindung stehen und an ihrem radial äußeren Ende in jeweils einer Einspritzdüse 18 münden. Die Einspritzdüsen 18 sind auf der Oberseite 17 des Verteilerblocks 16 angeordnet und ragen jeweils frei nach oben. Im vorliegenden Ausführungsbeispiel sind 8 Einspritzdüsen 18 parallel zueinander ausgerichtet und über den Umfang verteilt angeordnet.

Jeder Befüllkanal 17 weist etwa den Durchmesser der jeweils zugeordneten Einspritzdüse 18 auf. Dadurch kann sich nur eine geringe Menge an Füllgut innerhalb des Einspritzkopfes 12 ansammeln, das nicht mehr planmäßig in die Backware eingebracht werden kann und somit bei der Reinigung des Einspritzkopfes 12 entsorgt werden muss. Auf diese Weise kann auch ein häufiger Wechsel des Einspritzkopfes 12 in wirtschaftlich günstiger Weise erfolgen, so dass auch kleine Mengen an Füllgut wirtschaftlich verarbeitet werden können.

Das hintere, gemäß Figur 1 untere Ende des Zylinders 11 ist an der Betätigungsvorrichtung 20 befestigt. Die Betätigungsvorrichtung 20 besitzt ein plattenförmiges Grundteil 28, an dem ein sich radial bezüglich einer Längsachse L des Zylinders 11 erstreckender Hebel 21 um eine Achse 22 schwenkbar gelagert ist. Die Achse 22 verläuft senkrecht zur Längsachse L des Zylinders 11. An seinem äußeren freien Ende trägt der Hebel 21 einen Handgriff 23. Der Benutzer kann den Hebel um die Achse 22 schwenken, indem er eine Druckkraft auf den Handgriff 23 aufbringt. Die Schwenkbewegung des Hebels 21 wird mit Hilfe eines üblichen Schrittschaltwerks 27 in eine in Längsrichtung der Längsachse L des Zylinders 11 gerichtete Vorschubbewegung einer Kolbenstange 31 umgesetzt. Die Kolbenstange 31 trägt an ihrem vorderen, im Innenraum des Zylinders 11 angeordneten Ende einen plattenförmigen Kolben 30, dessen Querschnitt den Innenquerschnitt des Zylinders 12 entspricht und der in abgedichteter Weise an der Innenwandung des Zylinders 11 anliegt, so dass das in dem Zylinder 11 vorhandene Füllgut durch den Kolben 30 verschoben und durch den Zuführkanal 15, die Befüllkanäle 19 und die Einspritzdüsen 18 ausgebracht werden kann. In Abwandlung des hier dargestellten Ausführungsbeispiels kann anstelle der Kolbenstange 31 und des plattenförmigen Kolbens 30 auch ein Langkolben in dem Zylinder 11 längs verschieblich gelagert sein.

Der Hebel 21 ist mittels einer Feder in seine Ausgangsstellung vorgespannt, so dass er in seine Ausgangsstellung zurückkehrt, sobald der Benutzer den Hebel 21 los lässt. Bei Rückkehr des Hebels 21 in seine Ausgangsstellung werden die Kolbenstange 31 und der Kolben 30 in dem Zylinder 11 nicht mit zurückgezogen. Bei mehrfacher Betätigung bzw. Schwenkung des Hebels 21 erfolgt somit eine axiale Verschiebung der Kolbenstange 31 und des Kolbens 30 innerhalb des Zylinders 11 in mehreren aufeinanderfolgenden Schritten.

Dem Hebel 21 ist ein Anschlag 24 zugeordnet. Dieser Anschlag 24 besitzt einen Kragarm 25, der senkrecht zur Längsachse L des Zylinders 11 verläuft und unterhalb des Hebels 21 angeordnet ist. Der Hebel 21 und der Kragarm 25 weisen dabei in die gleiche Richtung. Am freien Ende des Kragarms 25 ist an diesem ein Distanzstück 26 angebracht. Bei einer nach unten gerichteten Bewegung des Hebels 21, durch die eine Verschiebung des Kolbens 30 bewirkt wird, kommt der Hebel 21 mit dem Distanzstück 26 in Anlage. Auf diese Weise ist der Hub des Hebels 21 auf ein definiertes Maß beschränkt und der Kolben 30 kann bei jedem Hub des Hebels 21 lediglich um eine definierte Strecke innerhalb des Zylinders 11 verschoben werden. Dadurch ist die Füllgutmenge, die pro Hub des Hebels 21 durch die Einspritzdüsen 18 abgegeben wird, genau und in reproduzierbarer Weise festgelegt.

Um die Füllgut- oder Dosiermenge pro Hub des Hebels 21 zu verändern, kann der Benutzer das Distanzstück 26 aufwechseln. Dadurch ist ein veränderter maximaler Hub des Hebels 21 gegeben. Durch eine geeignete Wahl des jeweils verwendeten Distanzstücks 26 können somit unterschiedliche Größen der Dosier- oder Füllgutportionen eingestellt werden.

Die Betätigungsvorrichtung 20 besitzt eine Befestigungsvorrichtung 32, mit der die Betätigungsvorrichtung 20 und somit die gesamte Füllvorrichtung 10 an einer Platte, beispielsweise einer Tischplatte befestigt werden kann. Die Befestigungsvorrichtung 32 umfasst einen Klemmkopf 33, der auf einer Gewindespindel 34 sitzt. Durch Drehung der Gewindespindel 34 kann die Position des Klemmkopfs 33 verstellt werden, so dass die Füllvorrichtung 10 an der Tischplatte festgeklemmt werden kann.

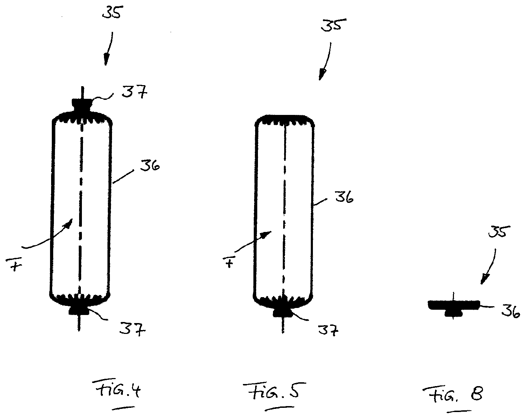

Figur 4 zeigt einen flexiblen Füllgutbehälter 35, in dem eine vorbestimmte Menge des Füllguts F, beispielsweise eine Creme, enthalten ist. Der Füllgutbehälter 35 ist von einer flexiblen Hülle 36 beispielsweise in Form eine Schlauchbeutels gebildet, die an ihren beiden axialen Enden jeweils mittels eines Verschlusses 37 verschlossen ist.

Um den Füllgutbehälter 35 mit dem Füllgut F in den Zylinder 11 der Füllvorrichtung 10 einzubringen, wird der Einspritzkopf 12 von dem Zylinder 11 abgebaut, indem die Überwurfmutter 13 gelöst wird. Der obere Verschluss 37 des Füllgutbehälters 35 wird geöffnet (siehe Figur 5) und der Füllgutbehälter 35 wird mit seinem unteren verschlossenen Ende von oben in den Innenraum des Zylinders 11 eingesetzt. Dieser Zustand ist in Figur 6 dargestellt.

Anschließend wird der Einspritzkopf 12 mittels der Überwurfmutter 13 wieder in abgedichteter Weise auf den Zylinder 11 aufgesetzt.

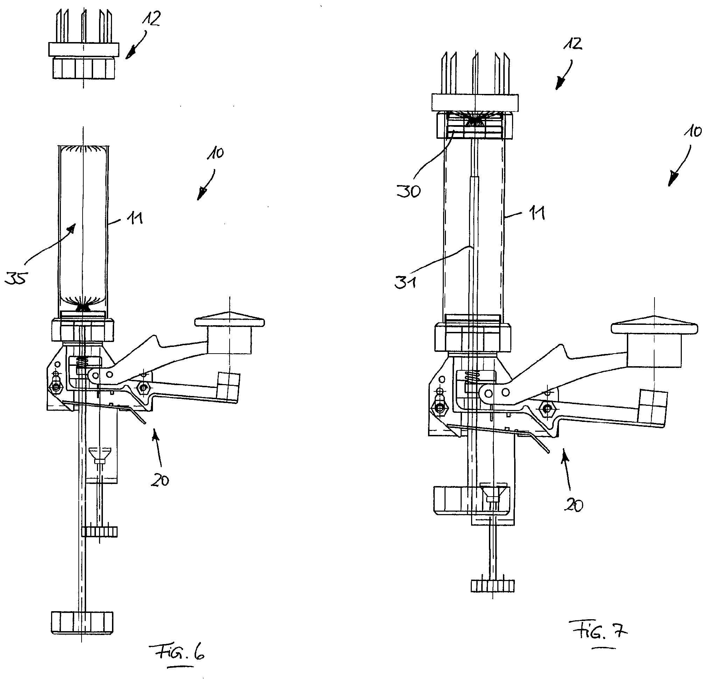

Die Dosierung des Füllgutes F erfolgt, indem der Benutzer auf den Handgriff 23 des Hebels 21 eine Druckkraft aufbringt, wodurch der Kolben 30 aus seiner unteren Position um einen Schritt bzw. eine vorbestimmte Strecke längs des Zylinders 11 nach oben bewegt wird. Dabei wird der Füllgutbehälter 35 mit einer Druckkraft beaufschlagt, wodurch das Füllgut F aus dem Füllgutbehälter 35 durch den Zuführkanal 15, die Befüllkanäle 19 und die Einspritzdüsen 18 ausgebracht wird. Nach Ausführung einer vorbestimmten Anzahl von Schwenkbewegungen oder Hüben des Hebels 21 befindet sich der Kolben 30 innerhalb des Zylinders 11 in seiner oberen Endstellung (siehe Figur 7), in der der flexible Füllgutbehälter 35 weitest möglich komprimiert und das Füllgut annähernd vollständig aus dem Füllgutbehälter 35 herausgedrückt ist. In dieser Position kann der Einspritzkopf 12 vom Zylinder 11 abgebaut und der komprimierte leere Füllgutbehälter 35 entnommen werden. Der flexible Füllgutbehälter 35 ist leicht verformbar und benötigt in seinem entleerten Zustand nur einen geringen Bauraum (siehe Figur 8). Der Kolben wird in seine untere Ausgangsstellung zurückgeführt und es kann dann ein neuer flexibler Füllgutbehälter 35 in den Innenraum des Zylinders 11 eingesetzt werden.

## Patentansprüche

1. Füllvorrichtung (10) zum Einspritzen eines Füllguts (F) in Backwaren, mit einem Füllgutbehälter (35), in dem das Füllgut (F) angeordnet ist, einem Zylinder (11), in den das Füllgut (F) einfüllbar ist, einem Einspritzkopf (12), der an dem vorderen Ende des Zylinders (11) angeordnet ist, einem in dem Zylinder (11) längs verschieblich gelagerten Kolben (30) und einer Betätigungsvorrichtung (20) zum Verschieben des Kolbens (30) in dem Zylinder (11), wobei der Zylinder (11) an seinem hinteren Ende an der Betätigungsvorrichtung (20) angebracht ist, wobei der Kolben (30) bei Betätigung der Betätigungsvorrichtung (20) um eine vorbestimmte Strecke verschiebbar ist, die vorbestimmte Strecke einstellbar und veränderbar ist und der Zylinder (11) mit der Betätigungsvorrichtung (20) und/oder dem Einspritzkopf (12) lösbar verbunden ist, und wobei der Einspritzkopf (12) mehrere Einspritzdüsen (18) aufweist, die an einem Verteilerblock (16) angeordnet sind, **dadurch gekennzeichnet, dass** in dem Verteilerblock (16) für jede Einspritzdüse (18) ein separater Befüllkanal (19) ausgebildet ist und dass alle Befüllkanäle (19) radial über den Umfang verteilt angeordnet sind und an ihrem stromauf liegenden radial inneren Ende mit einem gemeinsamen Zuführkanal (15) in Verbindung stehen und an ihrem radial äußeren Ende in jeweils eine der Einspritzdüsen (18) münden.

2. Füllvorrichtung nach Anspruch 1, **dadurch gekennzeichnet, dass** die Betätigungsvorrichtung (20) zumindest einen schwenkbaren Hebel (21) aufweist, dessen Schwenkbewegung in eine lineare Verstellbewegung des Kolbens (30) in dem Zylinder (11) umsetzbar ist.

3. Füllvorrichtung nach Anspruch 2, **dadurch gekennzeichnet, dass** dem Hebel (21) ein Anschlag (24) zugeordnet ist, der die maximale Schwenkbewegung des Hebels (21) begrenzt.

4. Füllvorrichtung nach Anspruch 3, **dadurch gekennzeichnet, dass** der Anschlag (24) ein auswechselbares Distanzstück (26) aufweist.

5. Füllvorrichtung nach einem der Ansprüche 1 bis 4, **dadurch gekennzeichnet, dass** der Füllgutbehälter (35) flexibel ausgebildet ist und mit dem Füllgut (F) in den Zylinder (11) einsetzbar ist.

6. Füllvorrichtung nach Anspruch 5, **dadurch gekennzeichnet, dass** der flexible Füllgutbehälter (35) ein Schlauchbeutel ist.

## Claims

1. Filling device (10) for injecting a filling material (F) into baked products, having a filling-material container (35), in which the filling material (F) is arranged, having a cylinder (11), into which the filling material (F) can be introduced, having an injecting head (12), which is arranged at the front end of the cylinder (11), having a piston (30), which is mounted in a longitudinally displaceable manner in the cylinder (11), and having an actuating device (20) for displacing the piston (30) in the cylinder (11), wherein the cylinder (11) has its rear end fitted on the actuating device (20), wherein, when the actuating device (20) is actuated, the piston (30) can be displaced by a predetermined distance, which can be adjusted and altered, and the cylinder (11) is connected in a releasable manner to the actuating device (20) and/or the injecting head (12), and wherein the injecting head (12) has a plurality of injecting nozzles (18), which are arranged on a distributor block (16), **characterized in that** the distributor block (16) has a separate filling channel (19) formed in it for each injecting nozzle (18), and **in that** all the filling channels (19) are distributed radially over the circumference and, at their upstream, radially inner end, connected to a common feed channel (15) and, at their radially outer end, open out into each case one of the injecting nozzles (18).

2. Filling device according to Claim 1, **characterized in that** the actuating device (20) has at least one pivotable lever (21), of which the pivoting movement can be converted into a linear adjustment movement of the piston (30) in the cylinder (11).

3. Filling device according to Claim 2, **characterized in that** the lever (21) is assigned a stop (24), which limits the maximum pivoting movement of the lever (21).

4. Filling device according to Claim 3, **characterized in that** the stop (24) has an interchangeable spacer (26).

5. Filling device according to one of Claims 1 to 4, **characterized in that** the filling-material container (35) is of flexible design and can be inserted, with the filling material (F), into the cylinder (11).

6. Filling device according to Claim 5, **characterized in that** the flexible filling-material container (35) is a tubular bag.

## Revendications

1. Dispositif de fourrage (10) servant à injecter un fourrage (F) dans des pâtisseries, avec un récipient de fourrage (35) dans lequel le fourrage (F) est disposé, avec un cylindre (11) dans lequel le fourrage (F) peut être fourré, avec une tête d'injection (12) disposée au niveau de l'extrémité avant du cylindre (11), avec un piston (30) disposé de façon coulissante, dans le sens longitudinal, dans le cylindre (11) et avec un dispositif d'actionnement (20) servant au coulissement du piston (30) dans le cylindre (11), le cylindre (11) étant placé au niveau de son extrémité arrière contre le dispositif d'actionnement (20), le piston (30) pouvant être déplacé, lors de l'actionnement du dispositif d'actionnement (20), sur un tronçon prédéterminé, ledit tronçon prédéterminé pouvant être réglé et pouvant varier et le cylindre (11) étant relié de façon amovible au dispositif d'actionnement (20) et/ou à la tête d'injection (12) et la tête d'injection (12) comportant plusieurs buses d'injection (18) disposées au niveau d'un bloc de répartition (16), **caractérisé en ce qu'**un canal de fourrage (19) séparé est réalisé dans le bloc de répartition (16) pour chaque buse d'injection (18) et que tous les canaux de fourrage (19) sont disposés de façon répartie dans le plan radial sur la périphérie et sont reliés, au niveau de leur extrémité intérieure dans le plan radial située en amont, avec un canal d'alimentation (15) commun et débouchent, au niveau de leur extrémité extérieure dans le plan radial, dans respectivement une des buses d'injection (18).

2. Dispositif de fourrage selon la revendication 1, **caractérisé en ce que** le dispositif d'actionnement (20) comporte au moins un levier (21) pouvant pivoter dont le mouvement de pivotement peut être converti en un mouvement de déplacement linéaire du piston (30) dans le cylindre (11).

3. Dispositif de fourrage selon la revendication 2, **caractérisé en ce qu'**une butée (24) est associée au levier (21), ladite butée délimitant le mouvement de pivotement maximal du levier (21).

4. Dispositif de fourrage selon la revendication 3, **caractérisé en ce que** la butée (24) comporte une pièce d'écartement (26) amovible.

5. Dispositif de fourrage selon l'une quelconque des revendications 1 à 4, **caractérisé en ce que** le récipient de fourrage (35) est réalisé de façon flexible et peut être inséré dans le cylindre (11), avec le fourrage (F).

6. Dispositif de fourrage selon la revendication 5, **caractérisé en ce que** le récipient de fourrage (35) flexible est un pochon en tuyau flexible.
